# EUROPÄISCHE PATENTSCHRIFT

(11) **EP 1 039 983 B1**
(45) Veröffentlichungstag und Bekanntmachung des Hinweises auf die Patenterteilung: **12.09.2001**
(21) Anmeldenummer: 98965271.4
(22) Anmeldetag: 16.12.1998
(51) Int. Cl.: B23Q 3/18, B23K 37/04, B25B 5/00

(54) **SPANNEINRICHTUNG FÜR WERKSTÜCKE**
CLAMPING DEVICE FOR WORKPIECES
DISPOSITIF DE SERRAGE POUR PIECES

(30) Priorität: 17.12.1997 DE 29722276 U; 23.04.1998 DE 29807366 U
(43) Veröffentlichungstag der Anmeldung: 04.10.2000
(73) Patentinhaber: KUKA Schweissanlagen GmbH, 86165 Augsburg (DE)
(72) Erfinder: STEINHART, Wilhelm, D-86316 Friedberg (DE)
(74) Vertreter: Ernicke, Hans-Dieter, Dipl.-Ing.
(86) Internationale Anmeldenummer: EP9808238
(87) Internationale Veröffentlichungsnummer: WO9930868

(56) Entgegenhaltungen:
- EP-A- 0 343 651
- WO-A-96/38265
- DE-A- 3 801 813
- DE-A- 4 243 370
- DE-A- 19 536 341
- DE-A- 19 716 874
- DE-U- 9 114 638
- GB-A- 1 466 434
- US-A- 2 497 943

## Beschreibung

Die Erfindung betrifft eine Spanneinrichtung für Werkstücke, insbesondere Karosserieteile mit den Merkmalen im Oberbegriff des Hauptanspruchs.

Eine solche Spanneinrichtung ist aus der DE-A-197 16 874 bekannt. Sie besteht aus ein oder mehreren auf einem Spanntisch positionierbaren Spannern, mit denen die Werkstücke, z. B. Karosserieteile von Fahrzeugen, gespannt werden können. Das Werkstück kann dann von einem Industrieroboter oder dergleichen geschweißt oder auf andere Weise bearbeitet werden. Die Spanner sind mehrteilig ausgebildet und bestehen aus einem Fußteil, einem Mittelteil und einem Kopfteil, die in mindestens einer Achse verstellbar aneinander geführt sind. Für die gegenseitige Verstellung ist eine Positioniereinrichtung mit einer Höhenverstellung und eine Fixiervorrichtung vorhanden. Die Höhenverstellung besteht aus ein oder mehreren Stellschrauben zwischen den Spannerteilen. Das Fußteil kann auch über ein untergelegtes Distanzstück am Spanntisch befestigt sein. Die Fixiervorrichtung besteht aus einer Langlochführung mit zwei Klemmschrauben. Die Positioniereinrichtung kann darüber hinaus auch aus einer Winkelverstellung mit einem zusätzlichen Drehlager zwischen den Spannerteilen bestehen. Alternativ kann auch ein gebogenes Mittelteil verwendet werden. Die untere Stellschraube für die Höhenverstellung ist für den Lieferanten vorbehalten und dient zur festen Einstellung einer vom Anwender vorgegebenen Basislänge der Spanneinheit. Für den Kunden und Anwender ist dann nur noch die obere Stellschraube zwischen Mittelteil und Kopfteil zugänglich. Über diese Stellschraube kann er dann noch in einem kleinen Rahmen eine Fein-Nachjustierung durchführen. Die Spanner sind nach Anwendervorgaben exakt positioniert und halten das Werkstück in der vorgegebenen Lage. Ungenaue Werkstücke (Vorserie) sowie Verzug bei der Bearbeitung können es erforderlich machen, die Spannstellen nachzujustieren. Diese Nachjustierung kann mit dem vorbekannten Spanner von Kundenseite nur im Rahmen der oberen Stellschraube und in einem durch die Schraube begrenzten Bereich durchgeführt werden. Hierbei müssen die bei Stellschrauben bestehenden Ungenauigkeiten in Kauf genommen werden. Der Spanner insgesamt lässt sich im Rahmen der Stellschrauben stufenlos in der Höhe verstellen.

Die WO 96/38265 zeigt eine andere Spanneinheit, die aus einer Konsole, einem Aufspannbock, einem Zentrierstück und einer daran befestigbaren Stütze besteht. Diese Spanneinheit hat eine feste vorgegebene Länge, die durch die bedarfsgerecht zugeschnittene Länge der Stütze bestimmt ist. Die Stütze kann gegenüber der fußseitigen Konsole unterschiedliche Winkelpositionen einnehmen, was durch eine Aufteilung von Aufspannbock und Zentrierstück in voneinander unabhängige Bauteile und durch entsprechend geformte Anschlussflächen erreichbar ist.

Die US-A-2, 497, 943 offenbart eine andere Spanneinheit für Nähmaschinen, Schreibmaschinen, Elektromotoren oder dergleichen für Reparaturzwecke. Sie besitzt hierfür eine. schwenkbare Halterung mit Klemmbacken, die sich durch eine Spindel verstellen lassen.

Aufspannpaletten für Werkstücke an Werkzeugmaschinen oder Messmaschinen sind aus der DE-A-195 36 341, der DE-A-42 43 370 und der DE-A-38 01 813 bekannt. Die Spanner haben hierbei Spannpratzen, die mittels Stellschrauben, verzahnten Platten und dergleichen höhenverstellbar sind. Aus der GB-A-1 466 434 ist schließlich noch eine Spanneinheit mit mehreren winkelverstellbar aneinander gelagerten Spannerteilen bekannt.

Es ist daher Aufgabe der vorliegenden Erfindung, eine flexiblere Spanneinrichtung aufzuzeigen.

Die Erfindung löst diese Aufgabe mit den Merkmalen im Hauptanspruch.
Bei der Spanneinrichtung sind die einzelnen Spanner in sich mehrteilig und in mindestens einer translatorischen und/oder rotatorischen Achse verstellbar ausgebildet, d.h. insbesondere nach der Höhen und/oder nach mindestens einer Seite und/oder in mindestens einem Winkel. Für eine exakte Verstellung besitzen sie eine Positioniereinrichtung und eine Fixiervorrichtung, wobei diese Einrichtungen baulich getrennt oder kombiniert werden können. Dadurch lassen sich die Spanner zum Ausgleich von Verwerfungs- und Verzugserscheinungen in der Höhe und/oder im Winkel beliebig verstellen. Dabei werden die Spanner in sich verändert. Eine Demontage und Neupositionierung der Spanner ist nicht erforderlich.

Die Spanneinrichtung hat den Vorteil, daß wenige Standardelemente für einen großen Anwendungsbereich genügen. Dabei ist eine stufenlose Höhen-, Seiten- und/oder Winkeleinstellung mit hoher Genauigkeit und Reproduzierbarkeit möglich.

Bei der Höhenverstellung werden zwei Verstellmöglichkeiten mit einer Grobverstellung und einer Feineinstellung für sehr genaue und trotzdem über einen weiten Bereich reichende Einstellmöglichkeiten kombiniert. Hierbei hat zumindest für die Höhenverstellung eine rasterförmige Aufnahme mit einer Stufenverstellung in größeren Schritten in Kombination mit geeigneten passgenauen Auflagen besondere Vorteile hinsichtlich Handhabung, Präzision und Bau- bzw. Montageaufwand. Die Auflagen können als Scheiben ausgebildet sein und für die Seitenverstellung eine zusätzliche Seitenbeweglichkeit besitzen.

Die Spanneinrichtung ermöglicht eine einfache Nachjustage beim Hersteller oder auf der Baustelle. Ferner bietet sich die Möglichkeit zur Erstellung von Fußteil und Stellteil der Spanner aus einfachen Lagerteilen ohne projektspezifische Bearbeitung. Die genaue Spannereinstellung erfolgt erst über die Positionier- und Fixiervorrichtung.

Die bevorzugte Fixiervorrichtung mit der Klemmeinrichtung hat den Vorteil, daß sie zugleich auch als Positioniervorrichtung für die Seitenverstellung dienen kann. Durch die Anstellung eines Klemmkeils oder eines Druckstücks gegen einen Eckbereich des geführten Bauteilgliedes oder Stellteils erfolgt eine schräge Krafteinleitung, die für eine bessere Fixierung sorgt. Dadurch ist es insbesondere möglich, das Stellteil nach mehreren Richtungen oder Achsen abzustützen. Zusätzliche Fixierungen können entfallen. Das Stellteil läßt sich dabei über Zwischenplatten und Passplatten exakt positionieren. Die Lage des Stellteils ist zudem statisch bestimmbar.

Die Fixiervorrichtung verzeiht Toleranzfehler an den Bauteilgliedern bzw. den Teilen der Klemmeinrichtung und sorgt dadurch stets für eine positionsgenaue und sichere Fixierung. Dabei können durch Einlage von Zwischenplatten und Passplatten, Passscheiben oder dergleichen anderen Positionierelementen, auch besonders genaue gegenseitige Positionen der Bauteilglieder eingestellt und gesichert werden.

Für die Seitenverstellung können an den anderen Positioniereinrichtungen zusätzliche Seitenbeweglichkeiten vorhanden sein. Diese können mit Vorteil im Bereich der Auflagen und Lagerstifte ausgebildet werden. Ferner ist es günstig, eine formschlüssige Steckverbindung zwischen Auflage und Lagerstift anzuordnen und außerdem eine Fixierung vorzusehen. Dies ist für eine genaue Positionierung praktisch und verhindert den Verlust von Teilen beim Demontieren oder Ummontieren.

In den Unteransprüchen sind weitere vorteilhafte Ausgestaltungen der Erfindung angegeben.

Die Erfindung ist in den Zeichnungen beispielsweise und schematisch dargestellt. In einzelnen zeigen:
- Figur 1:: eine schematische Draufsicht auf einen Spanntisch mit einer Spanneinrichtung und einem gespannten Werkstück,
- Figur 2:: eine Seitenansicht eines einzelnen Spanners mit einer Höhenverstellung,
- Figur 3:: eine Stirnansicht des Spanners gemäß Pfeil III von Figur 2,
- Figur 4:: die Höhenverstellung des Spanners von Figur 2 und 3,
- Figur 5 bis 7:: einen Spanner mit einer Höhen- und Winkelverstellung in verschiedenen Ansichten und Betriebsstellungen,
- Figur 8 bis 10:: eine Variante zu Figur 5 bis 7 mit einer anderen Winkelverstellung,
- Figur 11:: eine Variante des Spanners mit einer anderen Fixiervorrichtung und einer Seitenverstellung in Seitenansicht,
- Figur 12:: einen Schnitt durch die Anordnung von Figur 11 entsprechend Schnittlinie XII-XII,
- Figur 13:: eine Variante zu Figur 12 und
- Figur 14:: eine Variante der Auflage von Figur 4.

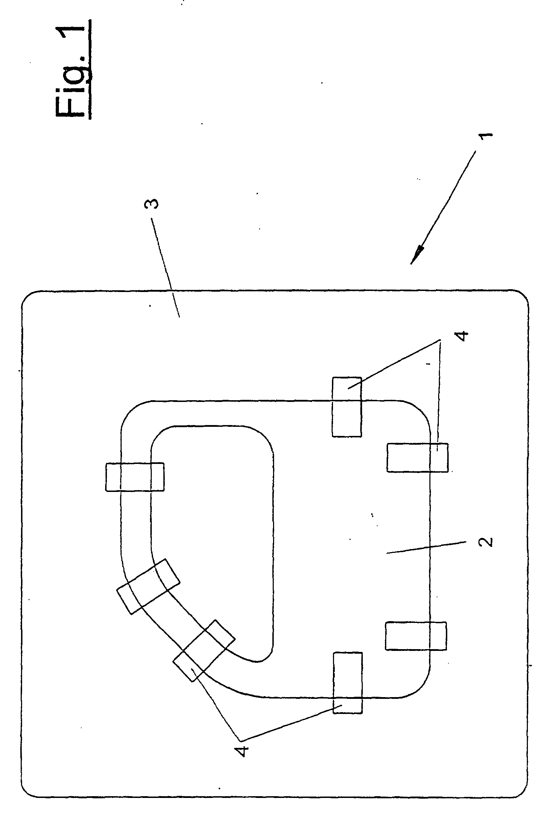

Figur 1 zeigt in einer schematischen Draufsicht einen Spanntisch (3), auf dem ein oder mehrere Werkstücke (2) mit ein oder mehreren Spannern (4) in einer bearbeitungsgerechten exakten Lage gespannt werden. Bei dem Werkstück (2) handelt es sich vorzugsweise um ein Karosserieteil eines Fahrzeugs. In der gezeigten Ausführung ist es eine Fahrzeugtüre. Die Spanner (4) sind an geeigneten Stellen auf dem Spanntisch (3) fest oder verstellbar montiert. Das Werkstück (2) wird durch einen Industrieroboter (nicht dargestellt) oder durch eine andere geeignete Vorrichtung in der Spannlage bearbeitet. Dies kann z.B. ein Schweißvorgang sein.

Die Spanner (4) haben beliebig ausgebildete Spannelemente. In der gezeigten Ausführungsform sind zwei zueinander bewegliche, insbesondere schwenkbar gelagerte Spannbacken (6) vorgesehen, die mit passend bearbeiteten Spannflächen zwei Karosseriebleche (2) zwischen sich aufnehmen und spannen. Sie werden durch einen geeigneten Antrieb (5) betätigt. Der Antrieb (5) kann beliebig ausgestaltet sein. Er ist vorzugsweise als fernsteuerbarer motorischer Antrieb oder als hydraulischer oder pneumatischer und ebenfalls fernsteuerbarer Zylinder ausgebildet. Die Spannelemente sind am Stellteil (9) angeordnet.

Die einzelnen Spanner (4) sind in der nachfolgend beschriebenen Weise in sich mehrteilig und in mindestens einer translatorischen und/oder rotatorischen Achse verstellbar. Vorzugsweise sind sie in der Höhe und/oder nach mindestens einer Seite und/oder in mindestens einem Winkel verstellbar. Die Verstellmöglichkeiten können beliebig kombiniert und auch einzeln genutzt werden.

Die Spannerlage kann dabei unter Beibehaltung der Position auf dem Spanntisch (3) stufenlos. verändert werden. Mit dieser Verstellung werden bearbeitungsbedingte Fehler am Werkstück (2) vorgreifend kompensiert. Die Spanner (4) werden dabei bewusst mit Abweichung von ihrer vorgegebenen Soll-Lage eingestellt. Beispielsweise können die Spanner (4) geringfügig höher und/oder mit Winkelabweichung eingestellt werden, um dadurch einen Schweißverzug oder dergleichen und eine dabei auftretende Absenkung des Werkstückes (2) im Spannbereich aufzunehmen und zu kompensieren. Nach der Bearbeitung hat dann das Werkstück (2) die gewünschte Form.

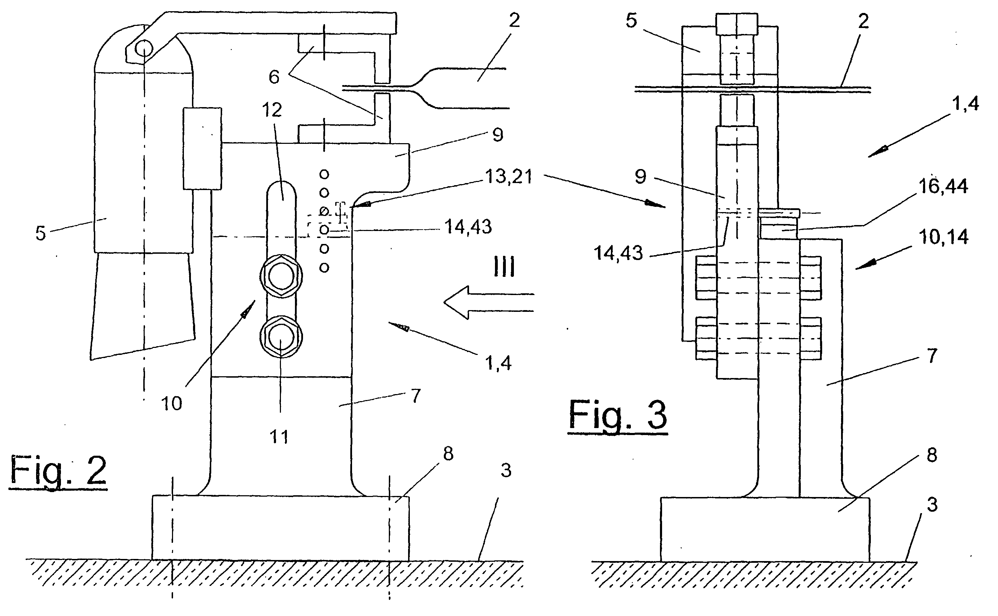

Figur 2 und 3 zeigen einen einzelnen Spanner in einer Seiten- und Stirnansicht. Der Spanner (4) ist in sich mehrteilig und besteht z.B. aus einem Fußteil (7) und mindestens einem daran verstellbar angeordnetet Stellteil (9). Das Fußteil (7) hat z.B. einen Sockel (8), der in der vorgegebenen Position auf dem Spanntisch (3) befestigt, z.B. verschraubt wird. Das Stellteil (9) besteht in der gezeigten Ausführungsform aus einer vertikal ausgerichteten Platte, die an dem Fußteil (7) verstellbar in geeigneter Weise geführt ist. Die Führung (12,12') kann z.B. eine formschlüssig ineinander greifende Nutenführung oder dergleichen sein. In Abweichung der gezeigten Ausführungsform kann der Spanner (4) auch aus mehr als zwei Teilen (7,9) bestehen.

Zur Verstellung des Stellteils (9) gegenüber dem Fußteil (7) ist eine Fixiervorrichtung (10) und eine Positioniervorrichtung (13) vorgesehen, die in unterschiedlicher und geeigneter Weise ausgebildet sein können. Die Positioniervorrichtung (13) erlaubt eine stufenlose Verstellung der Teile (7,9) über einen weiten Stellbereich und besitzt dazu eine Grobverstellung (43) und eine Feineinstellung (44).

Im gezeigten Ausführungsbeispiel besteht die Fixiervorrichtung (10) aus einer vertikalen Langlochführung (12) in einem der beiden Spannerteile (7, 9) und aus zwei oder mehreren Klemmschrauben (11). In einer nicht dargestellten Ausführungsform können z.B. an den Klemmschrauben (11) hülsenartige Nutensteine angeordnet sein, die in passende Gegennuten an den einander zugekehrten Kontaktflächen der Spannerteile (7,9) greifen.

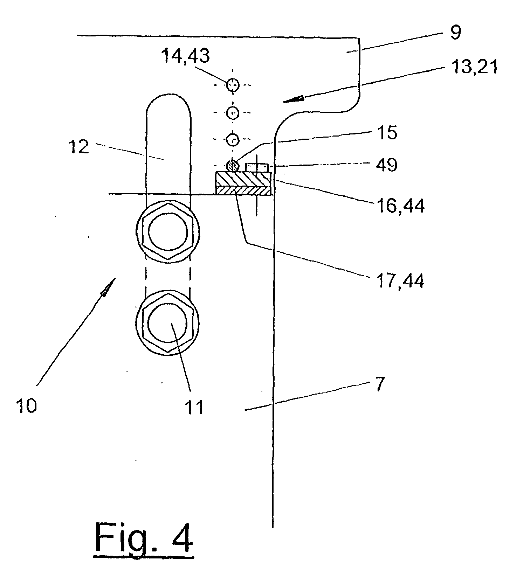

Die Positioniereinrichtung (13) ist im Ausführungsbeispiel von Figur 2 bis 4 als Höhenverstellung (21) ausgebildet. Hier ist im Stellteil (9) die Grobverstellung (43) als eine rasterförmige Aufnahme (14) ausgebildet, die eine Höhenverstellung in größeren Schritten ermöglicht. Die Aufnahme (14) besteht hier z.B. aus einer vertikalen Bohrungsreihe, wobei die Öffnungen im Bohrungsraster untereinander vorzugsweise den gleichen Abstand haben. In die Aufnahme (14) kann an der benötigten Position ein Lagerstift (15) gesteckt werden, der sich über die Feineinstellung (44) auf dem Fußteil (7) abstützt. Die Feineinstellung (44) besteht hier aus einer Auflage (16) und gegebenenfalls einer oder mehreren zusätzlichen Passplatten oder Passscheiben (17). Die Auflage (16) kann eine vorgegebene Standarddicke besitzen. Die Passplatte (17), kann auf ein individuelles Maß geschliffen oder anderweitig bearbeitet sein. Sie kann alternativ auch aus einem Paket von mehreren vorbereiteten Passplatten, sog. Shims, gebildet werden. Über die Auflage (16) und die Passplatte(n) (17) ist innerhalb der Schrittweite des Bohrungsrasters (14) eine stufenlose Köheneinstellung möglich.

In einer nicht dargestellten Variante ist die Grobverstellung (43) bzw. die Aufnahme (14) als Nutenraster ausgebildet. Die Lagerung erfolgt hier über einen Nutenstein, der in der jeweils gewünschten Höhe in die Aufnahme (14) eingesetzt wird.

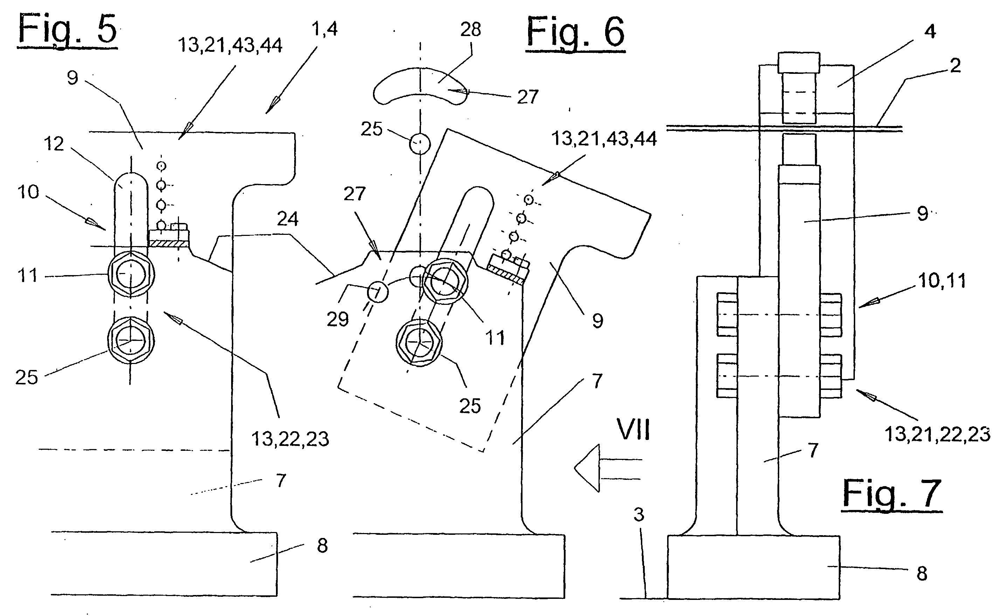

Figur 5 bis 7 zeigen eine Spanneinrichtung (1), bei der die Positioniereinrichtung (13) als Winkelverstellung (22) ausgebildet ist.

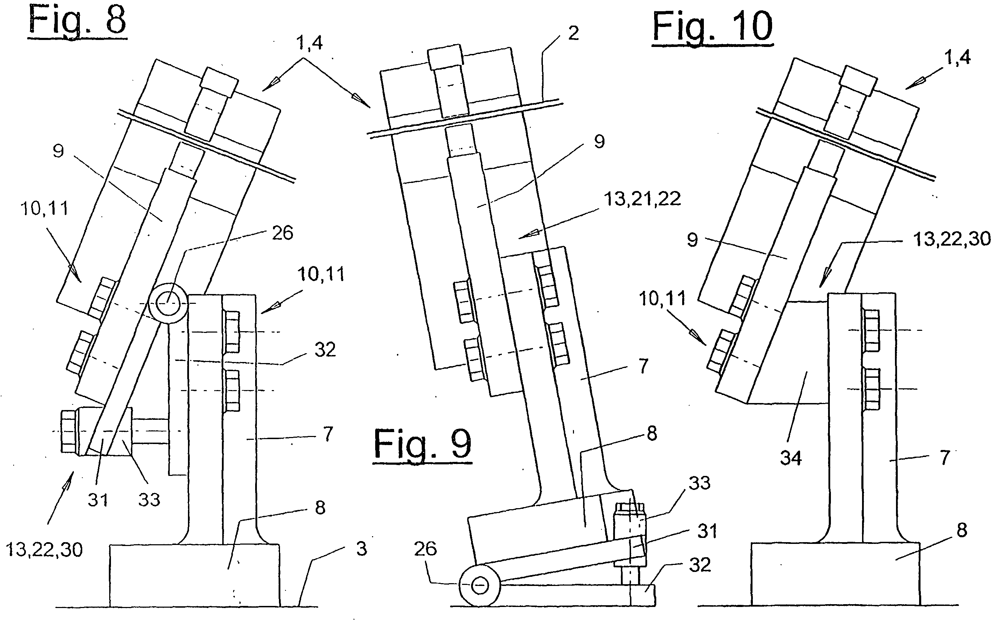

In Figur 5 bis 7 besteht die Winkelverstellung (22) aus einer Dreheinheit (23), die sich um eine im wesentlichen horizontale und quer zur Hauptebene des Steilteils (9) sich erstreckende Drehachse (25) verstellbar ist. Die Ausführungsform von Figur 8 bis 10 zeigt eine Variante, bei der die Winkelverstellung (22) als Kippeinheit (30) ausgebildet ist, die eine im wesentlichen horizontale und längs der Hauptebene des Stellteils (9) ausgebildete Kippachse (26) aufweist. Die Achsen (25, 26) sind quer zueinander ausgerichtet. Die Spanneinrichtung (1) kann eine Dreheinheit (23) und/oder eine Kippeinheit (30) und gegebenenfalls zusätzlich eine Höhenverstellung (21) der vorbeschriebenen Art aufweisen.

Die Dreheinheit (23) von Figur 5 bis 7 gestattet eine stufenlose oder abgestufte Drehung des Stellteils (9) gegenüber dem Fußteil (7). Dazu ist zwischen dem Fußteil (7) und dem Stellteil (9) eine Drehführung (27) angeordnet. Wie Figur 6 in zwei Varianten verdeutlicht, kann die Drehführung (27) eine um die Drehachse (25) gebogene Langlochführung (28) und/oder mehrere im Kreisbogen um die Drehachse (25) angeordnete Einzelbohrungen (29) aufweisen. Die Drehachse (25) wird durch eine vorzugsweise zentrische Bohrung im Fußteil (7) gebildet.

Die Drehführung (27) wirkt mit der Fixiereinrichtung (10) zusammen und nutzt für die Winkelverstellung die Klemmschrauben (11). Die untere Klemmschraube (11) bildet die Drehachse (25) und steckt in der entsprechenden Fußteilbohrung. Die obere Klemmschraube (11) wird in der Drehführung (27,28,29) gesteckt und auf das gewünschte Winkelmaß eingestellt. Die Langlochführung (12) befindet sich im Stellteil (9). Dieses kann über die Langlochführung (12) bei gegebener Winkelstellung zusätzlich in der Höhe verstellt werden. Hierzu ist z.B. eine Höhenverstellung (21) entsprechend der vorbeschriebenen Ausführungsbeispiele einsetzbar.

Das Fußteil (7) kann für die Höhenverstellung (21) eine Drehauflage (24) aufweisen. In der gezeigten Ausführungsform mit drei über Einzelbohrungen (29) vorgegebenen Winkelstellungen besteht die Drehauflage (24) aus einem abgewinkelten Sockel, der im Mittelbereich für die aufrechte Lage gemäß Figur 5 eine zum Sockel (8) parallele Auflagefläche aufweist. An den beiden anschließenden Flankenbereichen ist der Sockel entsprechend der gewählten Winkelstellung abgeschrägt. Auf der Drehauflage (24) kann sich die Auflage (16) mit ihren Passplatten (17), dem Exzenter (18) oder dem Anschlag (19) abstützen. Die Winkel- und Höhenstellung wird über die Klemmschrauben (11) fixiert.

Figur 8 bis 10 zeigen die Kippeinheit (30) in drei verschiedenen Bauformen. In der Variante von Figur 8 und 9 besteht die Kippeinheit (30) jeweils aus einem Kippsockel (31) mit der endseitig angeordneten Kippachse (26). An der Kippachse (26) ist außerdem ein Flansch (32) angelenkt. Die Kippstellung ergibt sich über die Verdrehung des Kippsockels (31) gegenüber dem Flansch (32). Die gewünschte Winkeleinstellung und Fixierung erfolgt über ein Stellelement (33) zwischen Kippsockel (31) und Flansch (32), das z.B. als Stellschraube ausgebildet ist und eine Schrägführung für den Kippsockel (31) und die genaue Einstellung des gewünschten Kippwinkels besitzt.

In der Bauform von Figur 8 ist der Flansch (32) im wesentlichen vertikal ausgerichtet und am Fußteil (7) mittels der Fixiervorrichtung (10) befestigt. Hierbei kann eine Höhenverstellung (21) vorhanden sein. Die Kippachse (26) befindet sich am oberen Rand des Flansches (32). Der Kippsockel (31) ist am Stellteil (9) wiederum über eine Fixiervorrichtung (10) befestigt. Auch hier kann eine Längs- oder Höhenverstellung (21) vorhanden sein. Durch die Kippeinheit (30) wird das Stellteil (9) gegenüber dem Fußteil (7) verschwenkt.

Bei der Variante von Figur 9 befindet sich die Kippeinheit (30) zwischen dem Sockel (8) und dem Spanntisch (3), wobei der Spanner (4) als Ganzes mit Fußteil (7) und Stellteil (9) gegenüber dem Spanntisch (3) um die im wesentlichen tischparallele Kippachse (26) geschwenkt werden kann. Der Flansch (32) ist am Spanntisch (3) befestigt. Der Kippsockel (31) ist mit dem Sockel (8) verbunden. Das Stellelement (33) ist hier vertikal ausgerichtet. In Figur 8 ist es im wesentlichen horizontal ausgerichtet.

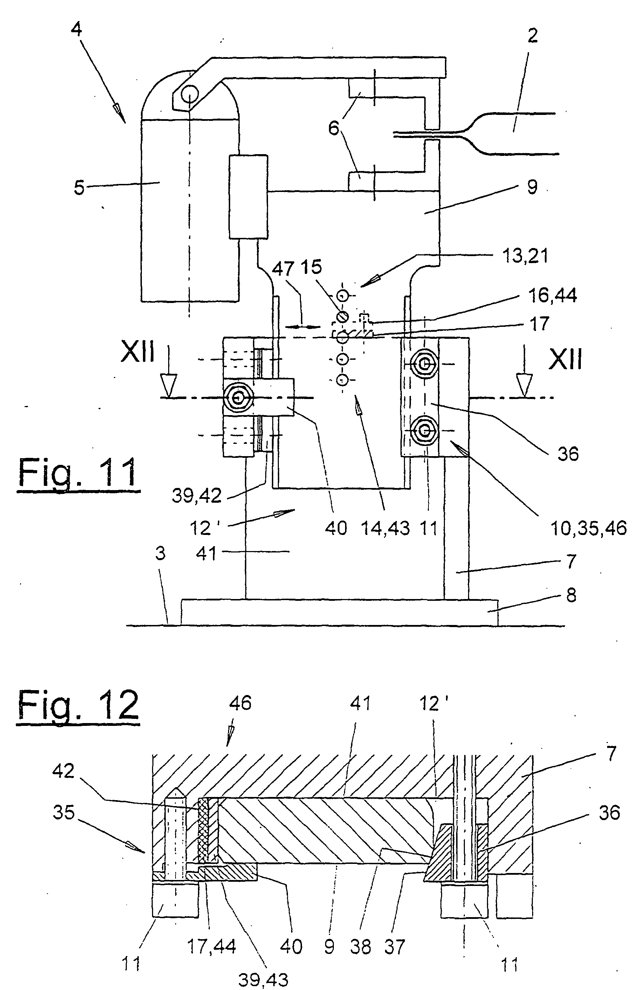

In der dritten Variante von Figur 10 besteht die Kippeinheit (30) aus einem Keilstück (34), das zwischen Fußteil (7) und Stellteil (9) angeordnet ist. Das Keilstück (34) hat entsprechend der gewünschten Kippstellung geneigte Befestigungsflächen für die Spannerteile (7,9). In der gezeigten Ausführungsform wird das Stellteil (9) gegenüber dem Fußteil (7) gekippt. Auch hier kann zusätzlich an ein oder beiden Befestigungsstellen eine Höhenverstellung (21) vorhanden sein. Alternativ kann das Keilstück (34) auch zwischen Sockel (8) und Spanntisch (3) angeordnet sein.

Die verschiedenen Bauformen der Dreheinheit (23) und der Kippeinheit (30) können miteinander kombiniert oder untereinander vertauscht werden.

Figur 11, 12 und 13 zeigen zwei Varianten der Fixiervorrichtung (10). Sie dient zugleich als Positioniervorrichtung (21) für die Seitenverstellung (46) und kann ansonsten mit beliebigen anderen Positioniereinrichtungen (13) kombiniert werden. Die Fixiervorrichtung (10) wirkt vorzugsweise in zwei Achsen. Sie ist als Klemmeinrichtung (35) ausgebildet, welche auf das geführte und verstellbare Stellteil (9) einwirkt.

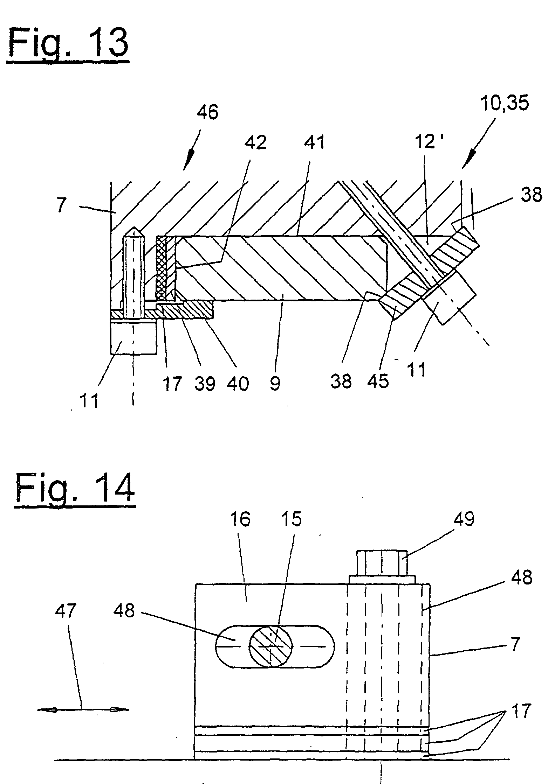

Um die Seitenverstellung (46) zu ermöglichen ist zumindest im Bereich der Höhenverstellung (21) eine zusätzliche Seitenbeweglichkeit (47) vorhanden. Figur 14 zeigt hierfür ein Beispiel.

Die Klemmeinrichtung (35) besitzt im Ausführungsbeispiel von Figur 11 und 12 mindestens einen vorzugsweise leistenförmigen Klemmkeil (36), der sich längs der nutförmigen Führung (12') erstreckt und ein oder mehrere lösbare Befestigungselemente, vorzugsweise in Form von Klemmschrauben (11), zur Fixierung aufweist. Der Klemmkeil (36) hat eine schräge Keilfläche (37), mit der er gegen einen Eckbereich (38) des geführten Stellteiles (9) angepresst werden kann. Figur 12 zeigt diese Anordnung im Querschnitt. Der Klemmkeil (36) wird dabei vorzugsweise an seiner der Keilfläche (37) gegenüberliegenden Rückseite an einer parallelen Seitenwand der Führungsnut (12') geführt und stützt sich dort seitlich ab.

Die Anstellung des Klemmkeils (36) erfolgt über die Klemmschrauben (11), die vorzugsweise doppelt oder mehrfach vorhanden sind und durch entsprechende Öffnungen im Klemmkeil (36) gesteckt sind. Die Klemmschrauben (11) greifen in ein Gewinde im Fußteil (7), das am Boden der Führungsnut (12') angeordnet ist. Dieser Boden bildet zugleich eine Führungsfläche (41) für das Stellteil (9). Der Klemmkeil (36) erweitert sich nach außen, so daß er beim Andrehen der Klemmschrauben (11) gegen den Eckbereich (38) gepresst wird.

Das geführte und verstellbare Stellteil (9) ist an zwei über Eck liegenden Flächen (41,42) der Führungsnut (12') abgestützt. Diese Führungsflächen (41,42) liegen der Keilfläche (37) vorzugsweise schräg gegenüber. Durch die schräge Keilfläche (37) wird eine schräge Kraftkomponente an der Ecke (38) auf das Stellteil (9) geleitet, die für eine Anpressung an beiden über Eck liegenden Führungsflächen (41,42) sorgt.

Vorzugsweise hat der zu klemmende Schaft des Stellteils (9) einen im wesentlichen rechteckigen Querschnitt, wobei ein oder mehrere Eckbereiche (38) eine Abschrägung oder Abrundung aufweisen können. Dementsprechend sind auch die beiden Führungsflächen (41,42) im rechten Winkel zueinander angeordnet. Die Führungsflächen (41,42) können direkt von der Führungsnut (12') bzw. dem Fußteil (7) gebildet werden.

Zur Seitenverstellung (46) und zur Einstellung einer bestimmten Seiten-Position des Stellteils (9) gegenüber der Führungsnut (12') bzw. dem Fußteil (8) können ein oder mehrere Zwischenplatten (39) und ggf. auch ein oder mehrere Passplatten (17) an einer oder beiden Führungsflächen (41,42) unterlegt werden. Die dickeren Zwischenplatten (39) sorgen für die Grobverstellung (44) und die dünneren Passplatten (17) für die Feineinstellung (43). Figur 12 zeigt diese Anordnung beispielsweise an der seitlichen Führungsfläche (42). Das Stellteil (9) liegt an der Zwischenplatte (39) an, welches die Führungsfläche (42) bildet und sich seinerseits über ein oder mehrere Passplatten (17) in einer einstellbaren Position an der benachbarten Seitenwand der Führungsnut (12') abstützt. Durch die Fase oder Abrundung liegt das Stellteil (9) nicht im Eckbereich zwischen den Führungsflächen (41, 42) an, so daß hier keine Lagefehler entstehen können.

Zusätzlich kann an der dem Klemmkeil (36) gegenüberliegenden Seite eine Klemmplatte (40) vorhanden sein, die mit einer Klemmschraube (11) oder dergleichen am Fußteil (7) lösbar befestigt werden kann. Die winkelförmige Klemmplatte (40) drückt von außen auf die freie Oberfläche des Steliteils (9) und presst es zusätzlich gegen die Führungsfläche (41) bzw. sichert das Bauteil (9 zusätzlich gegen eine Ablösung im benachbarten Eckbereich. Auf die Klemmplatte (40) kann alternativ aber auch verzichtet werden.

Figur 13 zeigt eine Bauvariante zu Figur 12. Hier ist die rechte Klemmschraube (11) schräg zur Führungsnut (12') ausgerichtet und besitzt statt des Klemmkeils (36) ein Druckstück (45), z.B. in Form einer Platte oder Scheibe, die vom Schraubenkopf gegen die entsprechend schrägen Eckbereiche (38) des Stellteils (9) und des Fußteils (7) bzw. der Führungsnut (12') angepresst wird. Die Führungsnut (12) ist bei dieser Variante auf der rechten Seite offen.

Die für die Seitenverstellung (46) erforderliche Seitenbeweglichkeit (47) im Bereich der Höhenverstellung (21) kann auf unterschiedliche Weise ausgebildet sein. In der einfachsten und in Figur 11 gezeigten Ausführungsform können der Lagerstift (15) und die Auflage (16) beziehungsweise die Passplatte(n) (17) in Richtung der Seitenbeweglichkeit (47) gegeneinander gleiten. Der Lagerstift (15) liegt hier nur lose auf der Oberseite der Auflage (16) auf.

Figur 14 zeigt eine Variante hierfür. Die Auflage (16) ist als ein größerer, quaderförmiger Klotz ausgebildet, der eine Öffnung (48) zum Durchstecken des Lagerstiftes (15) aufweist, die hier als eine längs der Seitenbeweglichkeit (47) ausgebildete Langlochführung (48) gestaltet ist. Die Auflage (16) ist außerdem mit einer Fixierung (49), z. B. einer Spannschraube, versehen, mit der sie durch die Passplatten (17) hindurch am Fußteil (7) befestigt werden kann. Für die Fixierung (49) kann ebenfalls eine Langlochführung (48) in Richtung der Seitenbeweglichkeit (47) vorhanden sein. Ähnliche Fixierungen können auch bei den vorbeschriebenen Auflagen in den anderen Ausführungsbeispielen vorhanden sein. Unter dem Auflageklotz (16) befinden sich in der vorbeschriebenen Weise ein oder mehrere Passplatten (17).

In Abwandlung der gezeigten Ausführungsbeispiele kann die Seitenbeweglichkeit (47) auch beliebig anders ausgebildet sein. Beispielsweise kann der Lagerstift (15) beweglich in einer geeigneten Langlochführung an der Aufnahme (14) gelagert sein, wobei die Öffnung (48) im Auflageklotz (16) als Zylinderbohrung ausgebildet ist.

Abwandlungen der gezeigten Ausführungsbeispiele sind in verschiedener Weise möglich. Z.B. kann eine mehrstufige Höhenverstellung vorgesehen sein. Zudem lassen sich die Spanner (4) gegebenenfalls auch gegenüber dem Spanntisch (3) seitlich verstellen. Dies läßt sich z.B. durch eine entsprechend abgewandelte Fixier- und Positioniereinrichtung (10,13) realisieren. Ferner können die Fixiervorrichtung (10) und die Positionierainrichtung (13) auch in beliebig anderer geeigneter Weise ausgebildet sein. Zudem können die Spannerteile (7,9) in ihrer Ausbildung und gegenseitigen Anordnung und Führung verändert werden. So können Form und Anordnung der Führungsnut (12') sowie der Führungsflächen (41, 42) variieren. Statt der gezeigten Gleitführung kann auch eine andere Führungsform vorhanden sein. Variabel sind hierbei auch die Formen der Spannerteile (7, 9). Der Klemmkeil (36) kann sich hierbei z.B. mitdrehen und das Stellteil (9) dann gegen die Führungs- oder Drehachse pressen. Ferner können mehrere Klemmkeile (36) vorhanden sein.

### BEZUGSZEICHENLISTE

- 1: Spanneinrichtung
- 2: Werkstück, Karosserieteil
- 3: Spanntisch
- 4: Spanner
- 5: Antrieb
- 6: Spannbacke
- 7: Spannerteil, Fußteil
- 8: Sockel
- 9: Spannerteil, Stellteil
- 10: Fixiervorrichtung
- 11: Klemmschraube
- 12: Führung, Langlochführung
- 12': Führung, Führungsnut
- 13: Positioniereinrichtung
- 14: Aufnahme, Bohrungsraster, Nutraster
- 15: Lagerstift
- 16: Auflage
- 17: Passplatte, Shim
- 18 19 20 21: Höhenverstellung
- 22: Winkelverstellung
- 23: Dreheinheit
- 24: Drehauflage
- 25: Drehachse
- 26: Kippachse
- 27: Drehführung
- 28: Langloch
- 29: Einzelbohrung
- 30: Kippeinheit
- 31: Kippsockel
- 32: Flansch
- 33: Stellelement, Stellschraube
- 34: Keilstück
- 35: Klemmeinrichtung
- 36: Klemmkeil
- 37: Keilfläche
- 38: Eckbereich
- 39: Zwischenplatte
- 40: Klemmplatte
- 41: Führungsfläche
- 42: Führungsfläche
- 43: Grobverstellung
- 44: Feineinstellung
- 45: Druckstück, Platte, Scheibe
- 46: Seitenverstellung
- 47: Seitenbeweglichkeit
- 48: Öffnung, Langloch
- 49: Fixierung

## Patentansprüche

1. Spanneinrichtung für Werkstücke (2), insbesondere Karosserieteile, bestehend aus ein oder mehreren auf einem Spanntisch (3) positionierbaren Spannern (4), wobei die Spanner (4) mehrere Spannerteile (7,9) aufweisen, die in mindestens einer Achse verstellbar aneinander geführt sind und die für die gegenseitige Verstellung eine Positioniereinrichtung (13) mit einer Höhenverstellung (21) und eine Fixiervorrichtung (10) aufweisen, **dadurch gekennzeichnet, dass** die Höhenverstellung (21) eine Grobverstellung (43) und eine Feineinstellung (44) aufweist, wobei die Grobverstellung (43) eine rasterförmige Aufnahme (14) und einen Lagerstift (15) am einen Spannerteil (9) besitzt und die Feineinstellung (44) eine Auflage (16) und gegebenenfalls ein oder mehrere Passplatten (17) und eine Fixierung (49) zur Abstützung des Lagerstiftes (15) am anderen Spannerteil (7) aufweist.

2. Spanneinrichtung nach Anspruch 1, **dadurch gekennzeichnet**, dass die Positioniereinrichtung (13) zusätzlich eine Winkelverstellung (22) und/oder eine Seitenverstellung (46) aufweist.

3. Spanneinrichtung nach Anspruch 1 oder 2, **dadurch gekennzeichnet, dass** die Höhenverstellung (21) und/oder die Winkelverstellung (22) eine Seitenbeweglichkeit (47) für die Seitenverstellung (46) aufweist.

4. Spanneinrichtung nach Anspruch 1, 2 oder 3, dadurch g e k e n n z e i c h n e t, dass die Spanner (4) ein auf dem Spanntisch (3) montierbares Fußteil (7) und ein daran höhen- und/oder winkelverstellbar und fixierbar geführtes Stellteil (9) aufweisen, wobei die rasterförmige Aufnahme (14) und der Lagerstift (15) am Stellteil (9) und die Auflage (16) mit den Passplatten (17) und der Fixierung (49) am Fußteil (7) angeordnet sind.

5. Spanneinrichtung nach einem der Ansprüche 1 bis 4, **dadurch gekennzeichnet, dass** die Aufnahme (14) als Bohrungs- oder Nutenraster ausgebildet ist.

6. Spanneinrichtung nach einem der Ansprüche 1 bis 5, **dadurch gekennzeichnet**, dass die Auflage (16) zur Bildung der Seitenbeweglichkeit (47) ein Langloch (48) zur Aufnahme des Lagerstifts (15) aufweist.

7. Spanneinrichtung nach einem der Ansprüche 1 bis 6, **dadurch gekennzeichnet, dass** die Fixiervorrichtung (10) eine Klemmeinrichtung (35) mit einer Seitenverstellung (46) für die Spannerteile (7,9) aufweist.

8. Spanneinrichtung nach einem der Ansprüche 1 bis 9, **dadurch gekennzeichnet, dass** die Fixiervorrichtung (10) einen Klemmkeil (36) oder ein Druckstück (45) aufweist, die von einem Befestigungselement gegen einen Eckbereich (38) des Stellteils (9) pressbar sind, wobei das geführte Stellteil (9) gegenüberliegend an zwei über Eck liegenden Flächen (41,42) einer Führung (12') abgestützt ist.

9. Spanneinrichtung nach Anspruch 8, **dadurch gekennzeichnet, dass** an mindestens einer Führungsfläche (41,42) zur Seitenverstellung (46) des Stellteils (9) eine oder mehrere Zwischenplatte(n) (39) angeordnet sind.

10. Spanneinrichtung nach Anspruch 8 oder 9, **dadurch gekennzeichnet, dass** der Zwischenplatte (39) mindestens eine Passplatte (17) zugeordnet ist.

11. Spanneinrichtung nach einem der Ansprüche 1 bis 10, **dadurch gekennzeichnet, dass** die Klemmeinrichtung (35) eine auf das geführte Bauteilglied (9) anstellbare Klemmplatte (40) aufweist.

12. Spanneinrichtung nach einem der Ansprüche 1 bis 11, **dadurch gekennzeichnet**, dass die Winkelverstellung (22) als Dreh- und/oder Kippeinheit (23,30) mit einer Verstellbarkeit in ein oder zwei Achsen (25,26) ausgebildet ist.

13. Spanneinrichtung nach Anspruch 12, **dadurch gekennzeichnet, dass** die Dreheinheit (23) eine Drehführung (27) zwischen Fußteil (7) und Stellteil (9) mit einer im wesentlichen horizontal und quer zur Hauptebene des Stellteils (9) verlaufenden Drehachse (25) aufweist.

14. Spanneinrichtung nach Anspruch 13, **dadurch gekennzeichnet, dass** die Drehführung (27) ein gebogenes Langloch (28) und/oder mehrere im Bogen angeordnete Einzelbohrungen (29) sowie eine Auflage (24) zur Abstützung der Höhenverstellung (21) aufweist.

15. Spanneinrichtung nach einem der Ansprüche 1 bis 14, **dadurch gekennzeichnet**, dass die Kippeinheit (30) einen um eine längs zur Hauptebene des Stellteils (9) ausgerichtete Kippachse (26) drehbaren Kippsockel (31) mit einem Stellelement (33) aufweist, wobei der Kippsockel (31) mit seiner Kippachse (26) an einem Flansch (32) gelagert ist, der am Fußteil (7), am Sockel (8) oder am Spanntisch (3) befestigbar ist.

## Claims

1. Clamping device for work pieces (2), in particular bodywork parts, comprising one or more clamps (4) which can be positioned on a clamping table (3), the clamps (4) having a plurality of clamp parts (7, 9) which are guided on one another adjustably in at least one axis and which have a positioning device (13) with a height-adjusting means (21) and a fixing device (10) for the mutual adjustment, **characterized in that** the height-adjusting means (21) has a course-adjusting means (43) and a fine-setting means (44), the course-adjusting means (43) having a grid-shaped holder (14) and a bearing pin (15) on the one clamp part (9), and the fine-setting means (44) having a support (16) and, if appropriate, one or more fitting plates (17) and a fixing means (49) for supporting the bearing pin (15) on the other clamp part (7).

2. Clamping device according . to Claim 1, **characterized in that** the positioning device (13) additionally has an angle-adjusting means (22) and/or a lateral adjusting means (46).

3. Clamping device according to Claim 1 - or 2, **characterized in that** the height-adjusting means (21) and/or the angle-adjusting means (22) have/has lateral mobility (47) for the lateral adjusting means (46).

4. Clamping device according to Claim 1, 2 or 3, **characterized in that** the clamps (4) have a foot part (7) which can be fitted on the clamping table (3) and a positioning part (9) which is guided thereon in a height-adjustable and/or angle-adjustable and fixable manner, the grid-shaped holder (14) and the bearing pin (15) being arranged on the positioning part (9) and the support (16) together with the fitting plates (17) and the fixing means (49) being arranged on the foot part (7).

5. Clamping device according to one of Claims 1 to 4, **characterized in that** the holder (14) is designed as a grid having holes or grooves.

6. Clamping device according to one of Claims 1 to 5, **characterized in that** the support (16) has, for forming the lateral mobility (47), a slot (48) for receiving the bearing pin (15).

7. Clamping device according to one of Claims 1 to 6, **characterized in that** the fixing device (10) has a locking device (35) having a lateral adjusting means (46) for the clamp parts (7, 9).

8. Clamping device according to one of Claims 1 to 9,
**characterized in that** the fixing device (10) has a locking wedge (36) or a pressure-exerting element (45), which wedge and element can be pressed against a corner region (38) of the positioning part (9) by a fastening element, in which case the guided positioning part (9) is supported opposite on two diagonally opposite surfaces (41, 42) of a guide (12').

9. Clamping device according to Claim 8, **characterized in that** one or more intermediate plates (39) are arranged on at least one guide surface (41, 42) for the lateral adjusting means (46) of the positioning part (9).

10. Clamping device according to Claim 8 or 9, **characterized in that** the intermediate plate (39) is assigned at least one fitting plate (17).

11. Clamping device according to one of Claims 1 to 10, **characterized in that** the locking device (35) has a locking plate (40) which can be placed onto the guided component element (9).

12. Clamping device according to one of Claims 1 to 11, **characterized in that** the angle-adjusting means (22) is designed as a rotating and/or tilting unit (23, 30) having adjustability in one or two axes (25, 26).

13. Clamping device according to Claim 12, **characterized in that** the rotating unit (23) has a rotating guide (27) between the foot part (7) and positioning part (9) having a rotational axis (25) which runs essentially horizontally and transversely with respect to the main plane of the positioning part (9).

14. Clamping device according to Claim 13, **characterized in that** the rotating guide (27) has a curved slot (28) and/or a plurality of individual holes (29) arranged in a curve and also a support (24) for supporting the height-adjusting means (21).

15. Clamping device according to one of Claims 1 to 14, **characterized in that** the tilting unit (30) has a tilting base (31) which can rotate about a tilting axis (26), which is arranged longitudinally with respect to the main plane of the positioning part (9), and has a positioning element (33), in which case the tilting base (31) is mounted with its tilting axis (26) on a flange (32) which can be fastened to the foot part (7), to the base (8) or to the clamping table (3).

## Revendications

1. Dispositif de serrage de pièces (2), notamment d'éléments de carrosserie, constitué d'un ou plusieurs porte-pièce (4) pouvant être positionnés sur un plateau (3) porte-pièce, les porte-pièce (4) comprenant plusieurs parties (7,9) de porte-pièce, qui sont guidées avec possibilité de se déplacer les unes par rapport aux autres dans au moins un axe et possèdent à cet effet un dispositif (13) de positionnement doté d'un réglage (21) vertical et un dispositif (10) d'immobilisation, **caractérisé en ce que** le réglage (21) vertical comprend un réglage (43) grossier et un réglage (44) fin, le réglage (43) grossier comportant un élément (14) récepteur du genre trame et un axe (15) de montage sur l'une (9) des parties de porte-pièce, et le réglage (44) fin comportant un élément (16) d'appui et éventuellement une ou plusieurs plaquettes (17) d'ajustage ainsi qu'un moyen (49) d'immobilisation, pour l'appui de l'axe (15) de montage contre l'autre (7) partie de porte-pièce.

2. Dispositif de serrage suivant la revendication 1, **caractérisé en ce que** le dispositif (13) de positionnement comprend en outre un réglage (22) angulaire et/ou un réglage (46) latéral.

3. Dispositif de serrage suivant la revendication 1 ou 2, **caractérisé en ce que** le réglage (21) vertical et/ou le réglage (22) angulaire sont dotés d'une mobilité (47) latérale pour le réglage (46) latéral.

4. Dispositif de serrage suivant la revendication 1, 2 ou 3, **caractérisé en ce que** les porte-pièce (4) comportent une partie (7) de base pouvant être montée sur le plateau (3) porte-pièce et une partie (9) réglable guidée sur celle-ci avec possibilité de réglage vertical et/ou angulaire et d'immobilisation, l'élément (14) récepteur du genre trame et l'axe (15) de montage étant disposés sur la partie (9) réglable, et l'élément (16) d'appui avec les plaquettes (17) d'ajustage et le moyen (49) d'immobilisation sur la partie (7) de base.

5. Dispositif de serrage suivant l'une des revendications 1 à 4, **caractérisé en ce que** l'élément (14) récepteur est réalisé sous forme de trame de perçages ou de rainures.

6. Dispositif de serrage suivant l'une des revendications 1 à 5, **caractérisé en ce que** l'élément (16) d'appui comporte, afin d'obtenir la mobilité (47) latérale, un trou (48) oblong destiné à recevoir l'axe (15) de montage.

7. Dispositif de serrage suivant l'une des revendications 1 à 6, **caractérisé en ce que** le dispositif (10) d'immobilisation comporte un moyen (35) de serrage doté d'un réglage (46) latéral pour les parties (7, 9) de porte-pièce.

8. Dispositif de serrage suivant l'une des revendications 1 à 7, **caractérisé en ce que** le dispositif (10) d'immobilisation comporte une cale (36) de serrage ou un élément (45) de pression, qui peuvent être pressés par un élément de fixation contre une région (38) de coin de la partie (9) réglable, la partie (9) réglable guidée s'appuyant à l'opposé contre deux faces (41, 42) en coin d'un guide (12').

9. Dispositif de serrage suivant la revendication 8, **caractérisé en ce qu'**une ou plusieurs plaquettes (39) d'écartement sont disposées sur au moins une face (41, 42) de guidage pour permettre le réglage (46) latéral.

10. Dispositif de serrage suivant la revendication 8 ou 9, **caractérisé en ce qu'**au moins une plaquette (17) d'ajustage est associée à la plaquette (39) d'écartement.

11. Dispositif de serrage suivant l'une des revendications 1 à 10, **caractérisé en ce que** le moyen (35) de serrage comporte une plaquette (40) de serrage, qui peut être appliquée contre la partie (9) réglable guidée.

12. Dispositif de serrage suivant l'une des revendications 1 à 11, **caractérisé en ce que** le réglage (22) angulaire est conçu sous forme d'unité (23, 30) de rotation et/ou de basculement avec une faculté de réglage dans un ou deux axes (25, 26).

13. Dispositif de serrage suivant la revendication 12, **caractérisé en ce que** l'unité (23) de rotation comporte un guidage (27) en rotation entre la partie (7) de base et la partie (9) réglable, doté d'un axe (25) de rotation s'étendant sensiblement horizontalement et transversalement au plan principal de la partie (9) réglable.

14. Dispositif de serrage suivant la revendication 13, **caractérisé en ce que** le guidage (27) en rotation comporte un trou (28) oblong arqué et/ou plusieurs perçages (29) individuels disposés en arc, ainsi qu'un élément (24) d'appui pour le soutien du réglage (21) vertical.

15. Dispositif de serrage suivant l'une des revendications 1 à 14, **caractérisé en ce que** l'unité (30) de basculement comporte un socle (31) basculant, qui est rotatif autour d'un axe (26) de basculement orienté dans la direction longitudinale du plan principal de la partie (9) réglable et qui est doté d'un élément (33) de réglage, le socle (31) basculant étant monté par son axe (26) de basculement sur une semelle (32) qui peut être fixée sur la partie (7) de base, le socle (8) ou le plateau (3) porte-pièce.
